# EUROPEAN PATENT SPECIFICATION

(11) **EP 2 345 749 B1**
(45) Date of publication and mention of the grant of the patent: **02.12.2015**
(21) Application number: 10000318.5
(22) Date of filing: 14.01.2010
(51) Int. Cl.: F03D 11/00, F16H 55/17, F16H 57/04, F03D 7/02

(54) **Gear assembly and wind turbine**
Getriebeeinheit und Windturbine
Ensemble d'engrenage et éolienne

(43) Date of publication of application: 20.07.2011
(73) Proprietor: Siemens Aktiengesellschaft, 80333 München (DE)
(72) Inventor: Kölpin, Helmut, 52499 Baesweiler (DE); Wohlleb, Matthias, 52064 Aachen (DE)

(56) References cited:
- EP-A2- 1 503 113
- WO-A1-2008/074320
- DE-A1-102008 005 767
- JP-A- 2005 201 332

## Description

The present invention relates to a gear assembly comprising a ring gear and at least one pinion gear. In addition, the invention relates to a wind turbine and, in particular, to a wind turbine yaw drive.

A wind turbine yaw drive is located between the nacelle and the tower of a wind turbine and serves for rotating the rotor of the wind turbine to alignment with the wind direction. It typically comprises a gear assembly with a ring gear fixed to the tower and a least one motor driven pinion gear fixed to the nacelle. An example for a wind turbine yaw system is described in WO 2008/053017 A2. When the wind turbine is not aligned to the wind direction the at least one motor of the yaw drive rotates the nacelle back into wind direction by driving the pinion gear which meshes with the ring gear. The yaw drive is typically a part of a closed loop control system for keeping the rotor aligned with the wind.

As yawing motion can be required quite often in wind turbines a long life time of the yaw drive gear assembly is desired. In serial manufacturing of industrial gear wheels conventionally durability is increased with hardening processes. These mentioned hardening processes are tempering, nitriding and case hardening. If gear wheels are hobbed and accordingly tempered they can be grinded for an improving the quality. If gear wheels are nitrided to reduce wear, a post-processing is not necessary. On the other hand, if gear wheels are case hardened after hobbing it is necessary to grind the gear flank afterwards because there is higher distortion induced by the case hardening process then by the nitriding process. Additionally, if there is need to harden an industrial gear wheel with high dimensions case-hardening can be substituted by induction-hardening process. Therefore a grinding process after the hardening procedure is not necessary, instead, the gear wheel has to get the needed quality before the hardening process starts.

In the case hardening process the gear wheels are set into a vitreous carbon atmosphere where they are carbonized to a certain depth. The surface layer gets hard due to carbon diffusion into the surface while the core, where the carbon does not diffuse, keeps its natural material hardness. In comparison to the nitriding process the hardening depth is higher with the case hardening process so that a higher durability can be reached. S. Martins and B. Schlecht "Ölfreie Getriebe" in Wissensportal Baumaschine.de 1 (2006), available under http://www.baumaschine.de/portal/archive/l 2006/wissenschaft/ zahnradgetriebe/zahnradgetriebe.pdf contains investigations made to run a gear pairing without lubricant. In particular DLC (diamond-like carbon) coatings are investigated. These wear resistant coatings consist of a amorphous diamond like carbon structures which can be created by CVD (chemical vapour deposition) or by PVD (physical vapour deposition). The investigations have shown that increasing thickness and decreasing roughness of the coating leads to an improvement of durability. Moreover, loss optimisation of the gears also has a large effect in improving the gear durability.

DE 102 15 881 A1 describes gears which allow to run without lubricant while not increasing wear. This is achieved by providing a hard layer which may be a DLC-layer and a soft layer which is located above the hard layer.

EP 1 503 113 A2 describes a gear that is comprised of a tooth surface and a hard carbon film formed on at least a part of the tooth surface. A diamond-like carbon film (DLC-film) is used as the hard carbon film. A large number of examples for gears with hard carbon films on the tooth surface is described where all examples deal wit spur gears except one example, which deals with a helical gear. Moreover, one example describes a planetary gear mechanism with a sun gear and planetary gears which are coated with hard carbon films and a ring gear which is not coated with the hard carbon film.

WO 2008/074320 A1 describes a gear system for a yaw drive or a pitch drive of a wind turbine. The gear system comprises a ring gear, a primary pinion gear and secondary pinion gears. The primary pinion gear meshes with the secondary pinion gears which in turn mesh with the ring gear. The primary pinion gear itself does not mesh with the ring gear. Document WO2008/074320 A1 is considered as the closest prior art and discloses the preamble of claim 1.

JP 2005 201332 A describes a number of gears with resin parts on the outer periphery of a core metal. A gear tooth is formed on the outer peripheral face of the resin part.

DE 10 2008 005 767 A1 describes a coated gear wheel where the coating may comprise carbon and, in particular, diamond-like carbon.

It is an objective of the present invention to provide an improved gear assembly, in particular for use in a wind turbine yaw drive. It is a further objective of the present invention to provide an improved yaw drive and an improved wind turbine.

The first objective is solved by a gear assembly according to claim 1, the second objective is solved by a wind turbine yaw drive as claimed in claim 10 and by a wind turbine as claimed in claim 11. The depending claims contain further developments of the invention.

An inventive gear assembly comprises a ring gear and at least one pinion gear. The ring gear comprises a surface which is coated with an abrasion resistant coating. The surface of the at least one pinion gear has a lower hardness than the surface of the ring gear.

The inventive gear assembly is, in particular, suitable for use in wind turbine yaw drives. This is based on the in the insight that at many locations of wind turbines the wind typically has a main wind direction so that the rotor shows towards this main wind direction over the most part of its lifetime. This means that a yawing motion due to small variations of the wind direction lead to small yawing angles necessary to bring the rotor into alignment with the wind direction. Hence, the pinion gears typically only mesh with a small fraction of the ring gear in most of time since large yawing angles which would require meshing with a substantial amount of the ring gear, are typically rare. This leads to an uneven load distribution over the circumference of the ring gear. On the other hand, since the pinion gears are much smaller in diameter than the ring gear even a small yawing angle can lead to a full rotation of the pinion gear so that the load distribution over the circumference of the pinion gears is considerably more even than the load distribution over the circumference of the ring gear. As a consequence, those parts of the ring gear which experience more meshing with the pinion gear are worn more rapidly than the other parts of the ring gear and the wear of the ring gear is much more uneven than the wear of the pinion gears. In particular this uneven wear of the ring gear is often the reason why the ring gear has to be replaced. However, the ring gear is typically fixed to the wind turbine nacelle and is, therefore, difficult to replace. On the other hand, a pinion gear is usually accessible from the inside of the tower or the inside of the nacelle so that it can be exchanged without much effort as compared to the change of the ring gear. Moreover, the pinion gear is much smaller than the ring gear and, considering also the fact that its can be softer than the ring gear, it is cheaper in production. Therefore, by applying an abrasion resistant coating only to the ring gear the life time of the part of the gear assembly which is the most difficult and the most expensive to replace can be increased while at the same time the number of parts which need to be coated with the abrasion resistant coating is small. At the same time, the at least one pinion gear is softer than the ring gear, so that abrasion during meshing of the gears mainly takes place at the pinion gear, which is cheap in production and can be replaced with relatively small effort. Hence, the inventive gear is a good compromise between reducing maintenance effort for the gear assembly and keeping the costs for producing the gear assembly low. Although the effect and advantage of the inventive gear assembly has been described with respect to a gear assembly used in a yaw drive of a wind turbine the gear assembly can be advantageous in other parts of a wind turbine or even in other facilities or installations in which the ring gear is more difficult to replace and/or more prone to wear than a pinion gear as well.

In an advantageous development of the inventive gear assembly the ring gear comprises a surface which is coated with a corrosion resistant coating. In this context, the abrasion resistant coating and the corrosion resistant coating can be in form of two different coatings which are successably applied or in form of a single coating which is, at the same time, abrasion resistant and corrosion resistant. For example the ring gear may be coated with a DLC-coating as a coating which provides abrasion resistance as well as corrosion resistance. Those DLC-coatings can tolerate temperatures up to about 150°C. Since such temperatures are usually not exceeded in yaw drives this coating is, in particular, useful in the context of gear assemblies used in wind turbine yaw drives.

It is advantageous if the depth of the coating is at least 1 µm, preferably at least 5 µm since a larger depth leads to an improved durability of the coating and, hence, to a longer life time of the coated ring gear than a smaller depth. A typical depth of a coating of the ring gear is in the range between 1 µm and 10 µm, in particular if the coating is a DLC-coating.

In addition, the surface of the coated ring gear advantageously has a roughness below 0.1 µm, preferably below 0.06 µm, for example between 0.03 and 0.06 µm. Such coatings can be realised by applying the coating by means of a CVD or a PVD-process. A small roughness leads to a low friction coefficient which in term reduces losses during the operation of the gear assembly and, thereby, further increases life time of the coated ring gear.

Losses of the gear assembly during its operation can be additionally decreased if the shapes of the teeth of the ring gear and/or the at least one pinion gear account for the expected deviations of shafts and bearings when the ring gear and the pinion gear are in engagement. By this measure a load and deviation related optimization of the teeth shapes are achieved which leads to a low loss gear assembly, which in turn leads to a further prolongation of the ring gear life time.

According to the invention, the at least one pinion gear may be equipped with an abrasion resistant coating. Additionally or alternatively, the at least one pinion gear may be equipped with a corrosion resistant coating as long as the coating(s) is/are softer than the abrasion resistant coating of the ring gear. However, although these coatings may be present they are not mandatory. In particular, it is also possible to leave the at least one pinion gear uncoated.

An inventive wind turbine yaw drive comprises an inventive gear assembly. The advantageous of such yaw drive have already mentioned with respect to the inventive gear assembly and will therefore, not be described again.

An inventive wind turbine comprises at least one inventive gear assembly. The gear assembly may, in particular, be part of the yaw drive of the wind turbine. An inventive wind turbine is advantageous in that the maintenance effort, in particular of the yaw drive, can be reduced with a moderate increase in costs for production of the gear assembly used in the yaw drive. Further advantageous result from the advantageous discussed with respect to the gear assembly.

Further features, properties and advantageous of the present invention will become clear from the following description of embodiments in conjunction with the accompanying drawings.
- Figure 1: shows an example for a wind turbine.
- Figure 2: schematically shows the gear assembly of a wind turbine yaw drive in a plan view.
- Figure 3: schematically shows a section through the ring gear material.

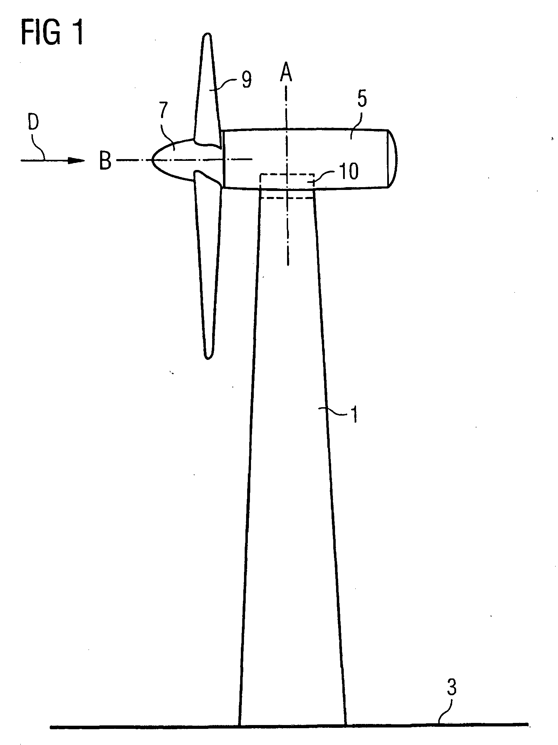

A typically wind turbine is shown in Figure 1. The wind turbine 1 comprises a tower 1 which rests on a fundament in the ground 3. At the top of the tower 1, a nacelle 5 is located which carries a rotor 7 driven by the wind. Typically the rotor comprises three rotor blades 9 arranged in angles of 120°. However, other rotor designs with more or less than three rotor blades are possible, for example two bladed rotors or even one bladed rotors. However, two bladed rotors and, in particular, three bladed rotors are most commonly used.

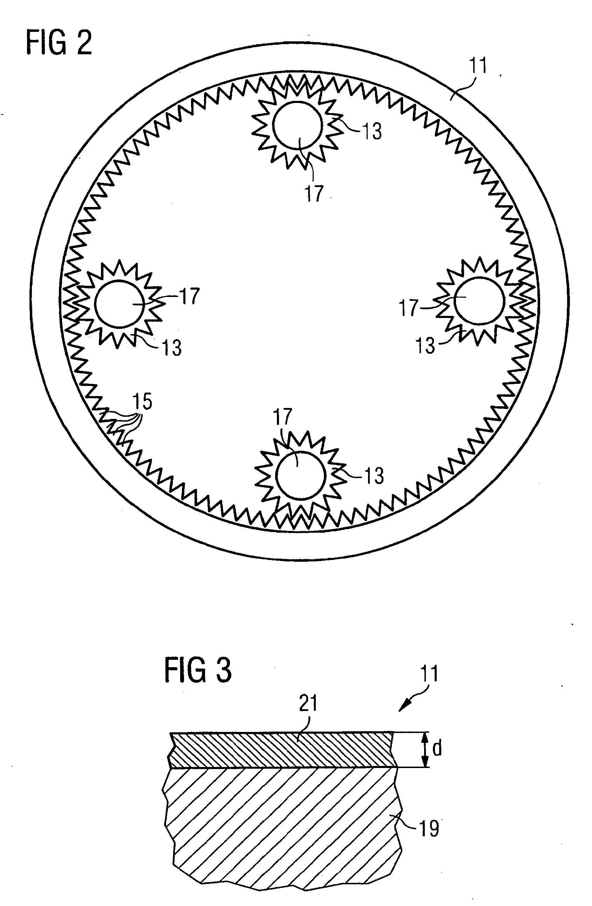

A yaw drive 10 is arranged between the nacelle 5 and the tower 1 for allowing the nacelle 5 to be rotated about a tower axis A so as to bring the rotor axis B into alignment with the wind direction D and keep the rotor axis B aligned with the wind direction D. Such a yaw drive 10 comprises a ring gear 11 which is typically located at the tower top and one or more pinion gears 13 located at the nacelle 5 which mesh with the ring gear 11 (see Figure 2). The pinion gear or pinion gears 13 can be driven by one or more motors so that by rotating the pinion gear 13 a rotation of the nacelle 5 about the tower axis A can be achieved. Note that although the ring gear is typically located at tower 1 and the pinion gears 13 are typically located at the nacelle 5 it would also be possible to locate the pinion gears 13 at the tower 1 and the ring gear 11 at the nacelle 5.

A schematic plan view of a gear assembly used in a wind turbine yaw drive is shown in Figure 2. The Figure shows the ring gear 11 and fur pinion gears 13. Note that it is not mandatory to use four pinion gears 13. In fact, the number of pinion gears 13 can be more or less than four and, in particular, even one pinion gear is enough. However, a higher number of pinion gears leads to a more even load distribution at the ring gear. Each pinion gear 13 can be driven by a drive motor (not shown) so as to impart a rotation to the nacelle 5. Note that it is possible to drive all pinion gears 13 by use of individual motors, which would be typically synchronised, or by use of a single motor in connection with a suitable transmission system.

The ring gear 11 is coated with a DLC-coating which leads to an increased abrasion and corrosion resistance of the ring gear and, hence, reduces wear. In particular, the coating is at least present in those sections of the ring gear 11 where the teeth 15 are present and mesh with the teeth 17 of the pinion gears 13. However, the whole surface of the ring gear 11 may be coated with the DLC-coating.

Figure 3 shows a section though the material of te ring gear 11. The Figure shows the ring gear substrate 19 onto which the DLC-cooating 21 is applied. Typical substrates for ring gears are steel materials. The coating 21 can be applied to the substrate 19 by means of the chemical vapour deposition process or a physical vapour deposition process. However, the temperature of the coating should not exceed 150° during the deposition procedure and should not exceed 150° during operation of the gear assembly for a longer time. However, temperature slightly exceeding 150° for short time, e.g. a few minutes could be tolerated although it would be best if 150° is not exceeded all. Typically, temperatures in wind turbine yaw drives do not reach 150°, so that a DLC-coating is suitable for use in such yaw drives.

The depth d of the applied coating 21 lies in the range between 1 µm and 10 µm, preferably above 5 µm. The surface roughness is preferably less than 0.1 µm, in particular in the range between 0.3 µm and 0.6 µm so that a sufficiently smooth surface of the ring gear teeth 15 is achieved. The smoother of the surface is, the less losses occur during operation of the gear assembly. Losses can be further reduced if the shape of the teeth 15 of the ring gear 11 and/or of the teeth 17 of the pinion gears 13 account for expected deviations of shafts and bearings connected to, or being part of, the gear assembly when the ring gear 11 and the pinion gears 13 are in engagement, in particular during operation of the gear assembly.

The pinion gears 13 are uncoated. They can be made of the same material as the ring gear substrate 11. Hence, the surface of the pinion gears 13, in particular the surface of the teeth 17 of the pinion gears 13, is softer than the surface of the ring gear 11. However, it is also possible to fabricate the pinion gears 13 or at least the teeth 17 of the pinion gears 13 from a different material than the substrate 19 of the ring gear 11 as long as the surface of the pinion gears is softer than the surface of the ring gear 11.

The present invention has been described by way of example with respect to Figures 1 to 3. Deviations from this example are possible. For example, the pinion gears 13 may be hardened or coated with an abrasion resistant coating and/or a corrosion resistant coating as long their surface have a lower hardness than the surface of the ring gear 11. For example, tempering, nitriding or induction hardening of the pinion gears is possible. Furthermore, although a DLC-coating has been used in the described embodiment for coating the ring gear 11 other abrasion resistant coatings could be used as well. Moreover, there is no need to use a coating which shows abrasion resistance and corrosion resistance at the same time. Instead it would be possible to apply two different coatings.

The invention which has been described with respect to an exemplary embodiment provides for a gear assembly with improved quality of the teeth surfaces so as to provide a high quality gear which allows for a smooth running behaviour to minimize abrasion and friction in contact patterns. In particular, a DLC-coating can work as a abrasion resistant coating and, at the same time as a corrosion resistant coating. As the abrasion resistant coating can be provided with a decreased roughness wear can be reduced and losses due to friction can also be reduced. This leads to increased life time of the ring gear and, hence, to reduced maintenance effort for the gear assembly.

## Claims

1. Wind turbine yaw drive (10) with a gear assembly comprising a ring gear (11) and at least one pinion gear (13) **characterized in that** the ring gear (11) comprises a surface which is coated with an abrasion resistant coating (21) and the surface of the at least one pinion gear (13) has a lower hardness than the surface of the ring gear (11).

2. Wind turbine yaw drive (10) according to claim 1, in which the ring gear (11) comprises a surface which is coated with a corrosion resistant coating (21).

3. Wind turbine yaw drive (10) according to claim 1 or claim 2, in which the ring gear (11) is coated with a DLC coating (21).

4. Wind turbine yaw drive (10) according to any of the claims 1 to 3, in which the surface of the coated ring gear (11) has a roughness below 0.1 µm.

5. Wind turbine yaw drive (10) according to any of the claims 1 to 4, in which the depth (d) of the coating (21) is at least 1 µm.

6. Wind turbine yaw drive (10) according to any of the claims 1 to 5, in which the at least one pinion gear (13) is coated with an abrasion resistant coating.

7. Wind turbine yaw drive (10) according to any of the claims 1 to 6, in which the at least one pinion gear (13) is coated with a corrosion resistant coating.

8. Wind turbine yaw drive (10) according to any of the claims 1 to 5, in which the at least one pinion gear (13) is uncoated.

9. Wind turbine yaw drive (10) according to any of the claims 1 to 8, in which the shapes of the teeth (15) of the ring gear (11) and/or the shapes of the teeth (17) of the pinion gear (13) account for the expected deviations of shafts and bearings when the ring gear (11) and the pinion gear (13) are in engagement.

10. Wind turbine with at least one gear assembly according to any of the claims 1 to 9.

## Patentansprüche

1. Windturbinenazimutantrieb (10) mit einer Getriebebaugruppe, die ein Tellerrad (11) und mindestens ein Planetenrad (13) umfasst, **dadurch gekennzeichnet, dass** das Tellerrad (11) eine Oberfläche umfasst, die mit einer abriebbeständigen Beschichtung (21) beschichtet ist, und die Oberfläche des mindestens einen Planetenrads (13) eine geringere Härte aufweist als die Oberfläche des Tellerrads (11).

2. Windturbinenazimutantrieb (10) nach Anspruch 1, bei dem das Tellerrad (11) eine Oberfläche umfasst, die mit einer korrosionsbeständigen Beschichtung (21) beschichtet ist.

3. Windturbinenazimutantrieb (10) nach Anspruch 1 oder 2, bei dem das Tellerrad (11) mit einer DLC-Beschichtung (21) beschichtet ist.

4. Windturbinenazimutantrieb (10) nach einem der Ansprüche 1 bis 3, bei dem die Oberfläche des beschichteten Tellerrads (11) eine Rauheit von weniger als 0,1 µm aufweist.

5. Windturbinenazimutantrieb (10) nach einem der Ansprüche 1 bis 4, bei dem die Tiefe (d) der Beschichtung (21) mindestens 1 µm beträgt.

6. Windturbinenazimutantrieb (10) nach einem der Ansprüche 1 bis 5, bei dem das mindestens ein Planetenrad (13) mit einer abriebbeständigen Beschichtung beschichtet ist.

7. Windturbinenazimutantrieb (10) nach einem der Ansprüche 1 bis 6, bei dem das mindestens ein Planetenrad (13) mit einer korrosionsbeständigen Beschichtung beschichtet ist.

8. Windturbinenazimutantrieb (10) nach einem der Ansprüche 1 bis 5, bei dem das mindestens eine Planetenrad (13) unbeschichtet ist.

9. Windturbinenazimutantrieb (10) nach einem der Ansprüche 1 bis 8, bei dem die Form der Zähne (15) des Tellerrads (11) und/ oder der Zähne (17) des Planetenrads (13) die zu erwartenden Abweichungen bei Wellen und Lagern berücksichtigt, wenn das Tellerrad (11) und das Planetenrad (13) in Eingriff stehen.

10. Windturbine mit mindestens einer Getriebebaugruppe nach einem der Ansprüche 1 bis 9.

## Revendications

1. Commande de lacet pour éolienne (10) avec un ensemble d'engrenages comprenant une couronne dentée (11) et au moins un pignon d'engrenage (13), **caractérisée en ce que** la couronne dentée (11) comprend une surface qui est revêtue d'un revêtement résistant à l'abrasion (21), et la surface de l'au moins un pignon d'engrenage (13) présente une dureté inférieure à celle de la surface de la couronne dentée (11).

2. Commande de lacet pour éolienne (10) selon la revendication 1, dans laquelle la couronne dentée (11) comprend une surface qui est revêtue d'un revêtement résistant à la corrosion (21).

3. Commande de lacet pour éolienne (10) selon la revendication 1 ou la revendication 2, dans laquelle la couronne dentée (11) est revêtue d'un revêtement DLC (21).

4. Commande de lacet pour éolienne (10) selon l'une quelconque des revendications 1 à 3, dans laquelle la surface de la couronne dentée (11) revêtue présente une rugosité inférieure à 0,1 µm.

5. Commande de lacet pour éolienne (10) selon l'une quelconque des revendications 1 à 4, dans laquelle la profondeur (d) du revêtement (21) est d'au moins 1 µm.

6. Commande de lacet pour éolienne (10) selon l'une quelconque des revendications 1 à 5, dans laquelle l'au moins un pignon d'engrenage (13) est revêtu d'un revêtement résistant à l'abrasion.

7. Commande de lacet pour éolienne (10) selon l'une quelconque des revendications 1 à 6, dans laquelle l'au moins un pignon d'engrenage (13) est revêtu d'un revêtement résistant à la corrosion.

8. Commande de lacet pour éolienne (10) selon l'une quelconque des revendications 1 à 5, dans laquelle l'au moins un pignon d'engrenage (13) n'est pas revêtu.

9. Commande de lacet pour éolienne (10) selon l'une quelconque des revendications 1 à 8, dans laquelle les formes des dents (15) de la couronne dentée (11) et/ou les formes des dents (17) du pignon d'engrenage (13) rendent compte des déviations attendues des arbres et des paliers quand la couronne dentée (11) et le pignon d'engrenage (13) sont en prise.

10. Éolienne avec au moins un ensemble d'engrenages selon l'une quelconque des revendications 1 à 9.
